# EUROPEAN PATENT SPECIFICATION

(11) **EP 3 456 764 B1**
(45) Date of publication and mention of the grant of the patent: **24.06.2020**
(21) Application number: 18190916.9
(22) Date of filing: 27.08.2018
(51) Int. Cl.: B60C 1/00, C08L 9/00, C08L 9/06, C08L 25/16

(54) **RUBBER COMPOSITION FOR TIRES**
KAUTSCHUKZUSAMMENSETZUNG FÜR REIFEN
COMPOSITION DE CAOUTCHOUC POUR PNEUS

(30) Priority: 13.09.2017 JP 2017176018
(43) Date of publication of application: 20.03.2019
(73) Proprietor: Sumitomo Rubber Industries, Ltd., Kobe-shi, Hyogo 651-0072 (JP)
(72) Inventor: MAEKAWA, Natsuki, Kobe-shi, Hyogo 651-0072 (JP); OKABE, Noboru, Kobe-shi, Hyogo 651-0072 (JP)
(74) Representative: TBK

(56) References cited:
- EP-A1- 2 746 323
- EP-A1- 2 985 311
- EP-A1- 3 031 621
- EP-A1- 3 064 543
- EP-A1- 3 170 680
- US-B2- 9 267 014

## Description

### BACKGROUND OF THE INVENTION

### Field of the Invention

The present invention relates to a rubber composition for tire treads and a tire including a tire member formed from the rubber composition.

### Description of the Background Art

Important performance required for tires includes wet grip performance and abrasion resistance. In recent years, from the viewpoint of resource saving, improvement in low fuel consumption performance by improvement in rolling resistance of tires has been desired.

For improving abrasion resistance, a method in which carbon black is added to a rubber composition has been known, but balance between low fuel consumption performance and wet grip performance tends to deteriorate with this method. In addition, butadiene rubbers, which are advantageous in abrasion resistance, have low hysteresis loss and therefore have favorable low fuel consumption performance, but are disadvantageous in wet grip performance. As described above, in the case of attempting to improve various physical properties of tires, abrasion resistance and wet grip performance have a trade-off relationship, and it is difficult to achieve both desired abrasion resistance and desired wet grip performance.

Japanese Patent Application Laid-Open (Translation of PCT Application) No. 2012-512290 discloses a rubber composition having grip performance and rolling resistance which are improved by blending an alpha-methylstyrene polymer resin as a plasticizer. However, abrasion resistance is not taken into consideration, and there is room for further improvement.

EP 3 064 543 A1 relates to a winter tire including a tread formed from a rubber composition containing: an oil-extended BR having a cis content of 95 mol% or more, a vinyl content of 1 mol% or less, and a Mw of 530, 000 or more; an isoprene-based diene rubber; silica; and carbon black, the oil-extended BR being synthesized using a rare earth catalyst, the composition containing, per 100% by mass of total rubber solids, 8-80% by mass of the BR component contained in the oil-extended BR and 13-80% by mass of isoprene-based diene rubber, the composition containing, per 100 parts by mass of total rubber solids, 15-125 parts by mass of silica and 3-70 parts by mass of carbon black, provided that the combined amount of silica and carbon black is 45-130 parts by mass.

EP 2 746 323 A1 relates to a sulfur-crosslinkable rubber mixture comprising 45-85 phr natural- and/or synthetic polyisoprene, 15-55 phr at least one styrene-butadiene rubber, 25-55 phr carbon black, 4-40 phr silicic acid and 2-20 phr at least one hydrocarbon resin made of alpha-methylstyrene, styrene and/or vinyl toluene.

EP 2 985 311 A1 relates to a rubber composition for tires including, per 100 parts by mass of a rubber component, 1-60 parts by mass of an inorganic reinforcing agent having an average particle size of 0.69 µm or less and a nitrogen adsorption specific surface area of 10-50 m²/g, the inorganic reinforcing agent being represented by the formula kM₁·xSiO_{y}·zH₂O wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10.

An object of the present invention is to provide a rubber composition for treads having excellent wet grip performance and abrasion resistance in a balanced manner, and a tire including a tire member formed from the rubber composition.

### SUMMARY OF THE INVENTION

As a result of a thorough study, the present inventors have found that a rubber composition having excellent wet grip performance and abrasion resistance in a balanced manner is obtained by blending a styrene-butadiene rubber (SBR), a butadiene rubber (BR), and an aromatic vinyl polymer having a glass transition temperature equal to or higher than 20°C at predetermined proportions, and have accomplished the present invention.

Specifically, the present invention is directed to
[1] a rubber composition for tire treads, containing a rubber component and a plasticizer, wherein the rubber component contains 40 to 65% by mass of a styrene-butadiene rubber and 35 to 60% by mass of a butadiene rubber, the plasticizer contains an aromatic vinyl polymer having a glass transition temperature equal to or higher than 20°C, and an amount of the aromatic vinyl polymer relative to an amount of the styrene-butadiene rubber (amount of aromatic vinyl polymer/amount of styrene-butadiene rubber) is 0.3 to 0.75,
[2] the rubber composition according to [1], further containing a C5/C9-based petroleum resin as the plasticizer, and
[3] a tire including a tire member formed from the rubber composition according to [1] or [2].

The rubber composition for treads of the present invention and the tire including the tire member formed from the rubber composition have excellent wet grip performance and abrasion resistance in a balanced manner.

### DESCRIPTION OF THE PREFERRED EMBODIMENTS

An embodiment of the present invention is a rubber composition for treads containing a rubber component and a plasticizer, wherein the rubber component contains 40 to 65% by mass of a styrene-butadiene rubber and 35 to 60% by mass of a butadiene-based rubber, the plasticizer contains an aromatic vinyl polymer having a glass transition temperature equal to or higher than 20°C, and an amount of the aromatic vinyl polymer relative to an amount of the styrene-butadiene rubber (amount of aromatic vinyl polymer/amount of styrene-butadiene rubber) is 0.3 to 0.75.

For the rubber composition according to the present embodiment, the proportions of a styrene-butadiene rubber (SBR) and a butadiene rubber (BR) are determined such that the styrene-butadiene rubber (SBR) forms a sea phase and the butadiene rubber (BR) forms an island phase. By blending the aromatic vinyl polymer such that the amount of the aromatic vinyl polymer relative to the amount of the SBR (amount of aromatic vinyl polymer/amount of SBR) falls within a range of 0.3 to 0.75, a large amount of the aromatic vinyl polymer is considered to be dispersed in the sea phase present only by 40 to 65% of the entire rubber component, thereby improving loss of the sea phase, resulting in improvement of grip force. Furthermore, since the aromatic vinyl polymer is dispersed in the sea phase, the BR, which is the island phase, is considered to be dispersed as relatively large lumps during kneading, thereby easily stopping progress of fracture and improving abrasion resistance.

### <Rubber Component>

As the rubber component used in the present embodiment, a SBR and a BR are suitably used.

### (SBR)

The SBR is not particularly limited, and examples of the SBR include unmodified solution-polymerized SBR (S-SBR), unmodified emulsion-polymerized SBR (E-SBR), and modified SBRs thereof (modified S-SBR, modified E-SBR). Examples of modified SBRs include modified SBRs in which the ends and/or the main chain thereof is modified, and modified SBRs coupled by using tin, a silicon compound, or the like (a condensate, one having a branch structure, etc.).

As for the SBR, one of the exemplified SBRs may be individually used, or two or more of the exemplified SBRs may be used in combination.

The amount of the SBR in the rubber component is not less than 40% by mass, preferably not less than 45% by mass, and more preferably not less than 50% by mass. If the amount of the SBR is less than 40% by mass, wet grip performance tends to decrease. In addition, the amount of the SBR is not greater than 65% by mass, preferably not greater than 63% by mass, and more preferably not greater than 60% by mass. If the amount of the SBR exceeds 65% by mass, abrasion resistance and low fuel consumption performance tend to decrease.

From the viewpoint of grip performance during running, the styrene content of the SBR is preferably not less than 30% by mass, more preferably not less than 35% by mass, and further preferably not less than 40% by mass. In addition, from the viewpoint of initial grip performance, the styrene content is preferably not greater than 55% by mass, more preferably not greater than 50% by mass, and further preferably not greater than 45% by mass. In the present specification, the styrene content of the SBR indicates the content of the styrene part in the SBR and calculated by ¹H-NMR measurement.

From the viewpoint of grip performance during running, the vinyl content of the SBR is preferably not less than 30%, more preferably not less than 35%, and further preferably not less than 40%. In addition, from the viewpoint of initial grip performance, the vinyl content is preferably not greater than 55%, more preferably not greater than 50%, and further preferably not greater than 45%. In the present specification, the vinyl content of the SBR indicates the 1,2-bond unit content of the butadiene part in the SBR and is measured by infrared absorption spectrometry.

### (BR)

As the BR, various BRs such as a high-cis 1,4-polybutadiene rubber (high-cis BR), a butadiene rubber containing 1,2-syndiotactic polybutadiene crystal (SPB-containing BR), and a modified butadiene rubber (modified BR) can be used.

The high-cis BR is a butadiene rubber having a cis-1,4 bond content equal to or greater than 90% by mass. Examples of such a high-cis BR include BR1220 manufactured by Zeon Corporation, BR130B, BR150B, and BR150L manufactured by Ube Industries, Ltd., and BR730 manufactured by JSR Corporation. By containing the high-cis BR, low-temperature characteristics and abrasion resistance can be improved.

An example of the SPB-containing BR is not a BR in which 1,2-syndiotactic polybutadiene crystal is merely dispersed, but a BR in which 1,2-syndiotactic polybutadiene crystal is dispersed in a state of being chemically bound to the BR. Examples of such a SPB-containing BR include VCR-303, VCR-412, and VCR-617 manufactured by Ube Industries, Ltd.

Examples of the modified BR include a BR that is obtained by polymerizing 1,3-butadiene with a lithium initiator and then adding a tin compound to the polymerized 1,3-butadiene and in which the ends of the modified BR molecules are bound to each other through tin-carbon bonds (tin-modified BR), and a butadiene rubber having a condensed alkoxysilane compound at an active end thereof (modified BR for silica). Examples of such a modified BR include BR1250H (tin-modified) manufactured by Zeon Corporation, and an S-modified polymer (modified for silica) manufactured by Sumitomo Chemical Co., Ltd.

As for the BR, one of the exemplified BRs may be individually used, or two or more of the exemplified BRs may be used in combination.

The amount of the BR in the rubber component is 35% by mass, preferably not less than 37% by mass, and more preferably not less than 40% by mass. If the amount of the BR is less than 35% by mass, abrasion resistance tends to decrease. In addition, the amount of the BR is not greater than 60% by mass, preferably not greater than 55% by mass, and more preferably not greater than 50% by mass. If the amount of the BR exceeds 60% by mass, wet grip performance tends to decrease.

From the viewpoint of achieving a balance among wet grip performance, rolling resistance, and abrasion resistance, the total amount of the SBR and the BR in the rubber component is preferably not less than 80% by mass and more preferably not less than 90% by mass.

### (Other Rubber Components)

As a rubber component used in the present embodiment other than the SBR and the BR, crosslinkable rubber components that are generally used in the rubber industry can be used, and examples thereof include chloroprene rubber (CR), natural rubber (NR), isoprene rubber (IR), acrylonitrile-butadiene rubber (NBR), hydrogenated nitrile rubber (HNBR), isobutylene-isoprene-rubber (IIR), ethylene-propylene rubber, polynorbornene rubber, silicone rubber, polyethylene chloride rubber, fluororubber (FKM), acrylic rubber (ACM), and hydrin rubber. These crosslinkable rubber components may be individually used, or two or more of these crosslinkable rubber components may be used in combination.

### <Plasticizer>

As the plasticizer used in the present embodiment, an aromatic vinyl polymer and a C5/C9-based petroleum resin are suitably used.

### (Aromatic Vinyl Polymer)

In the present specification, the "aromatic vinyl polymer" refers to a polymer having an aromatic vinyl monomer unit content equal to or greater than 95% by mass. The aromatic vinyl polymer is not included in the rubber component.

In the aromatic vinyl polymer, as the aromatic vinyl monomer (unit), for example, styrene, α-methylstyrene, 1-vinylnaphthalene, 3-vinyltoluene, ethylvinylbenzene, divinylbenzene, 4-cyclohexylstyrene, 2,4,6-trimethylstyrene, etc., are used, and homopolymers of these monomers or copolymers of two or more of these monomers may be used. In addition, modified products of these monomers may be used. As the aromatic vinyl polymer, a homopolymer of α-methylstyrene or styrene or a copolymer of α-methylstyrene and styrene is preferable, and a copolymer of α-methylstyrene and styrene is more preferable, since the polymer is economic, is easily processed, and has excellent wet grip performance.

The glass transition temperature (Tg) of the aromatic vinyl polymer is not lower than 20°C, preferably not lower than 25°C, and more preferably not lower than 30°C. If the Tg of the aromatic vinyl polymer is lower than 20°C, grip performance tends to deteriorate. In addition, the Tg of the aromatic vinyl polymer is preferably not higher than 50°C, more preferably not higher than 45°C, and further preferably not higher than 40°C. If the Tg of the aromatic vinyl polymer exceeds 50°C, abrasion resistance and grip performance at low temperature tend to deteriorate. In the present specification, the Tg is a value measured at a temperature rise rate of 10°C/min according to JIS K 7121 using an automatic differential scanning calorimeter (DSC-60A) manufactured by Shimadzu Corporation.

The softening point of the aromatic vinyl polymer is preferably not higher than 150°C, more preferably not higher than 130°C, and further preferably not higher than 90°C, and is preferably not lower than 30°C, more preferably not lower than 60°C, and further preferably not lower than 75°C. When the softening point is in the above range, the advantageous effects of the present invention are favorably achieved. In the present specification, the softening point is a softening point that is measured with a ring and ball softening point measuring device according to JIS K 6220 and that is a temperature at which a ball has descended.

The weight-average molecular weight (Mw) of the aromatic vinyl polymer is preferably not less than 400, more preferably not less than 500, and further preferably not less than 800, and is preferably not greater than 10000, more preferably not greater than 3000, and further preferably not greater than 2000. When the weight-average molecular weight is in the above range, the advantageous effects of the present invention are favorably achieved. In the present specification, the weight-average molecular weight is obtained by conversion, based on polystyrene standard, of a value measured by gel permeation chromatography (GPC) (GPC-8000 series manufactured by Tosoh Corporation, detector: differential refractometer, column: TSKgel (registered trademark) SuperMultipore HZ-M manufactured by Tosoh Corporation).

The amount of the aromatic vinyl polymer per 100 parts by mass of the rubber component is preferably not less than 20 parts by mass and more preferably not less than 25 parts by mass. If the amount of the aromatic vinyl polymer is less than 20 parts by mass, there is a possibility that wet grip performance will not be sufficiently exhibited. In addition, the amount of the aromatic vinyl polymer is preferably not greater than 45 parts by mass, more preferably not greater than 40 parts by mass, and further preferably not greater than 35 parts by mass. If the amount of the aromatic vinyl polymer exceeds 45 parts by mass, abrasion resistance and low fuel consumption performance tend to deteriorate.

The amount of the aromatic vinyl polymer relative to the amount of the SBR (amount of aromatic vinyl polymer/amount of SBR) is not less than 0.3, and preferably not less than 0.35. If the amount of the aromatic vinyl polymer relative to the amount of the SBR is less than 0.25, there is a possibility that wet grip performance will not be sufficiently exhibited. In addition, the amount of the aromatic vinyl polymer relative to the amount of the SBR is not greater than 0.75, preferably not greater than 0.7, and more preferably not greater than 0.65. If the amount of the aromatic vinyl polymer relative to the amount of the SBR exceeds 0.75, abrasion resistance and low fuel consumption performance tend to deteriorate.

As the aromatic vinyl polymer, commercially-available products such as SYLVARES SA85, SA100, SA120, and SA140 manufactured by Arizona Chemical Company, and R2336 manufactured by Eastman Chemical Company are suitably used. As the copolymer of α-methylstyrene and styrene, for example, SYLVATRAXX4401 manufactured by Arizona Chemical Company, etc., are suitably used.

### (C5/C9-Based Petroleum Resin)

In the rubber composition according to the present embodiment, as the plasticizer, the aromatic vinyl polymer and a C5/C9-based petroleum resin other than the aromatic vinyl polymer are more preferably used in combination. In the present specification, the "C5/C9-based petroleum resin" refers to a resin obtained by copolymerizing a C5 fraction and a C9 fraction, and may be a hydrogenated or modified product of the resin. Examples of the C5 fraction include petroleum fractions having 4 to 5 carbon atoms such as cyclopentadiene, pentene, pentadiene, and isoprene. Examples of the C9 fraction include petroleum fractions having 8 to 10 carbon atoms such as vinyltoluene, alkylstyrene, indene, and methylindene. The C5/C9-based petroleum resin is not included in the rubber component.

By blending the C5/C9-based petroleum resin which is dispersed in both the SBR phase (sea phase) and the BR phase (island phase), the adhesion of the entire system of the rubber composition can be enhanced without a significant change in the structure of the sea phase and the island phase, and thus grip force is considered to be further improved.

The amount of the C5/C9-based petroleum resin is not particularly limited, but is preferably not less than 1 part by mass, more preferably not less than 3 parts by mass, and further preferably not less than 5 parts by mass, per 100 parts by mass of the rubber component. In addition, the amount of the C5/C9-based petroleum resin is preferably not greater than 40 parts by mass, more preferably not greater than 20 parts by mass, and further preferably not greater than 10 parts by mass.

The total amount of the aromatic vinyl polymer and the C5/C9-based petroleum resin in the resin per 100 parts by mass of the rubber component is preferably not less than 20 parts by mass and more preferably not less than 25 parts by mass. If the total amount of the aromatic vinyl polymer and the C5/C9-based petroleum resin is less than 20 parts by mass, there is a possibility that wet grip performance will not be sufficiently exhibited. In addition, the total amount of the aromatic vinyl polymer and the C5/C9-based petroleum resin is preferably not greater than 60 parts by mass, more preferably not greater than 50 parts by mass, and further preferably not greater than 40 parts by mass. If the total amount of the aromatic vinyl polymer and the C5/C9-based petroleum resin exceeds 60 parts by mass, abrasion resistance and low fuel consumption performance tend to deteriorate.

As the C5/C9-based petroleum resin, commercially-available products such as PRG-80 and PRG-140 manufactured by Zibo Luhua Hongjin New Material Co., Ltd., G-100 manufactured by Shandong Qilong Chemical Co., Ltd., and Petrotack (registered trademark) 60, Petrotack 70, Petrotack 90, Petrotack 100, Petrotack 100V, and Petrotack 90HM manufactured by Tosoh Corporation, are suitably used.

### (Other Plasticizers)

The rubber composition according to the present embodiment may further contain a plasticizer other than the aromatic vinyl polymer and the C5/C9-based petroleum resin. The plasticizer other than the aromatic vinyl polymer and the C5/C9-based petroleum resin is not particularly limited as long as the plasticizer is a plasticizer that is conventionally and generally used in the rubber industry. Examples of such a plasticizer include resins (terpene-based resins, rosin-based resins, petroleum resins, etc.), liquid polymers (liquid IR, liquid BR, liquid SBR, liquid farnesene rubber, etc.), and oils (aromatic oil, naphthene oil, paraffin oil, etc.) other than the aromatic vinyl polymer and the C5/C9-based petroleum resin.

The amount of the plasticizer other than the aromatic vinyl polymer and the C5/C9-based petroleum resin is not particularly limited, but is preferably not greater than 50 parts by mass, more preferably not greater than 30 parts by mass, and further preferably not greater than 20 parts by mass, per 100 parts by mass of the rubber component, from the viewpoint of achieving a balance among wet grip performance, rolling resistance, and abrasion resistance.

### <Other Components>

In addition to the above rubber components and the above plasticizers, the rubber composition according to the present embodiment can contain, as necessary, ingredients and additives that are conventionally used in the tire industry, for example, a reinforcing filler such as carbon black, silica, calcium carbonate, aluminum hydroxide, alumina, clay, and talc, a coupling agent, zinc oxide, wax, an antioxidant, stearic acid, a vulcanizing agent, a vulcanization accelerator, etc.

As the reinforcing filler, a reinforcing filler can be arbitrarily selected and used from among reinforcing fillers that are conventionally and commonly used in rubber compositions for tires, but carbon black and silica are mainly preferable.

As carbon black, one that is generally used for rubbers can be used as appropriate. Examples of carbon black include furnace black, acetylene black, thermal black, channel black, and graphite. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, etc., can be suitably used. Other than these, products synthesized by Sumitomo Rubber Industries, Ltd. can also be suitably used. These carbon blacks may be individually used, or two or more of these carbon blacks may be used in combination.

From the viewpoint of reinforcement and abrasion resistance, the nitrogen adsorption specific surface area (N₂SA) of the carbon black is preferably not less than 70 m²/g and more preferably not less than 90 m²/g. From the viewpoint of dispersibility and heat generation property, the N₂SA of the carbon black is preferably not greater than 300 m²/g and more preferably not greater than 250 m²/g. In the present specification, the N₂SA of the carbon black is a value measured according to JIS K 6217-2 "Carbon black for rubber industry-Fundamental characteristics-Part 2: Determination of specific surface area-Nitrogen adsorption methods-Single-point procedures".

In the case where carbon black is contained, from the viewpoint of reinforcement, the amount of the carbon black per 100 parts by mass of the rubber component is preferably not less than 1 part by mass and more preferably not less than 5 parts by mass. From the viewpoint of processability and heat generation property, the amount of the carbon black is preferably not greater than 200 parts by mass, more preferably not greater than 150 parts by mass, and further preferably not greater than 60 parts by mass.

The type of silica is not particularly limited, and examples of the silica include dry-process silica (silicic anhydride) and wet-process silica (hydrous silicic acid), but wet-process silica is preferable for the reason that it has a higher silanol group content.

From the viewpoint of wet grip performance, the nitrogen adsorption specific surface area (N₂SA) of the silica is preferably not less than 80 m²/g and more preferably not less than 100 m²/g. From the viewpoint of low fuel consumption performance and processability, the N₂SA of the silica is preferably not greater than 300 m²/g and more preferably not greater than 250 m²/g. In the present specification, the N₂SA of the silica is a value measured according to ASTM D3037-93.

In the case where silica is contained, from the viewpoint of wet grip performance, the amount of the silica per 100 parts by mass of the rubber component is preferably not less than 5 parts by mass and more preferably not less than 10 parts by mass. From the viewpoint of the dispersibility of the silica or from the viewpoint of processability, the amount of the silica is preferably not greater than 200 parts by mass and more preferably not greater than 150 parts by mass.

In the case where silica is contained, a silane coupling agent is preferably used in combination. As the silane coupling agent, any silane coupling agent that is conventionally used in combination with silica in the rubber industry can be used, and examples of the silane coupling agent include: sulfide-based silane coupling agents such as Si75 and Si266 (bis(3-triethoxysilylpropyl)disulfide) manufactured by Evonik Degussa GmbH, and Si69 (bis(3-triethoxysilylpropyl)tetrasulfide) manufactured by Evonik Degussa GmbH; mercapto-based silane coupling agents (silane coupling agents having a mercapto group) such as 3-mercaptopropyltrimethoxysilane, and NXT-Z100, NXT-Z45, and NXT manufactured by Momentive; vinyl-based silane coupling agents such as vinyltriethoxysilane; amino-based silane coupling agents such as 3-aminopropyltriethoxysilane; glycidoxy-based silane coupling agents such as γ-glycidoxypropyltriethoxysilane; nitro-based silane coupling agents such as 3-nitropropyltrimethoxysilane; and chloro-based silane coupling agents such as 3-chloropropyltrimethoxysilane. These silane coupling agents may be individually used, or two or more of these silane coupling agents may be used in combination. Among them, sulfide-based silane coupling agents and mercapto-based silane coupling agents are preferable since these silane coupling agents have strong bonding force with silica and an excellent low heat generation property.

In the case where a silane coupling agent is contained, from the viewpoint of silica dispersibility, the amount of the silane coupling agent per 100 parts by mass of the silica is preferably not less than 2 parts by mass and more preferably not less than 3 parts by mass. From the viewpoint of cost, the amount of the silane coupling agent is preferably not greater than 25 parts by mass and more preferably not greater than 20 parts by mass.

The rubber composition according to the present embodiment can contain an inorganic potassium salt in order to improve extrudability. Examples of the inorganic potassium salt include one or more potassium salts selected from the group consisting of potassium carbonate, potassium hydrogencarbonate, and potassium tetraborate, and potassium tetraborate is preferable.

From the viewpoint of extrudability, the amount of the inorganic potassium salt per 100 parts by weight of the silica is preferably not less than 0.3 parts by weight and more preferably not less than 0.4 parts by weight. From the viewpoint of abrasion resistance, the amount of the inorganic potassium salt per 100 parts by weight of the silica is preferably not greater than 1.45 parts by weight and more preferably not greater than 1 part by weight.

In the case where wax is contained, from the viewpoint of weather resistance of rubber, the amount of the wax per 100 parts by mass of the rubber component is preferably not less than 0.5 parts by mass and more preferably not less than 1 part by mass. From the viewpoint of whitening a tire by blooming, the amount of the wax is preferably not greater than 10 parts by mass and more preferably not greater than 5 parts by mass.

The antioxidant is not particularly limited, antioxidants that are used in the rubber field can be used, and examples thereof include quinoline-based antioxidants, quinone-based antioxidants, phenol-based antioxidants, and phenylenediamine-based antioxidants.

In the case where an antioxidant is contained, from the viewpoint of ozone crack resistance of rubber, the amount of the antioxidant per 100 parts by mass of the rubber component is preferably not less than 0.5 parts by mass and more preferably not less than 1 part by mass. From the viewpoint of abrasion resistance and grip performance, the amount of the antioxidant is preferably not greater than 10 parts by mass and more preferably not greater than 5 parts by mass.

Examples of a processing aid include fatty acid metal salts such as zinc stearate. Specific examples of the processing aid include fatty acid soap-based processing aids such as EF44 and WB16 manufactured by Struktol Company of America. The blending amount of the processing aid per 100 parts by mass of the entire rubber component is preferably not less than 0.1 part by mass, and is not greater than 5 parts by mass and particularly preferably not greater than 3 parts by mass.

In the case where stearic acid is contained, from the viewpoint of vulcanization rate, the amount of stearic acid per 100 parts by mass of the rubber component is preferably not less than 0.2 parts by mass and more preferably not less than 1 part by mass. From the viewpoint of processability, the amount of stearic acid is preferably not greater than 10 parts by mass and more preferably not greater than 5 parts by mass.

In the case where zinc oxide is contained, from the viewpoint of vulcanization rate, the amount of zinc oxide per 100 parts by mass of the rubber component is preferably not less than 0.5 parts by mass and more preferably not less than 1 part by mass. From the viewpoint of abrasion resistance, the amount of zinc oxide is preferably not greater than 10 parts by mass and more preferably not greater than 5 parts by mass.

As the vulcanizing agent, sulfur is suitably used. Examples of the sulfur include powdery sulfur, oil-treated sulfur, precipitated sulfur, colloidal sulfur, insoluble sulfur, and highly dispersible sulfur.

In the case where sulfur is contained as the vulcanizing agent, from the viewpoint of grip performance and abrasion resistance, the amount of the sulfur per 100 parts by mass of the rubber component is preferably not less than 0.5 parts by mass. From the viewpoint of degradation, the amount of the sulfur is preferably not greater than 3 parts by mass.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based or aldehyde-ammonia-based vulcanization accelerators, imidazoline-based vulcanization accelerators, and xanthate-based vulcanization accelerators. These vulcanization accelerators may be individually used, or two or more of these vulcanization accelerators may be used in combination. Among them, for the reason that vulcanization characteristics are excellent and low fuel consumption performance as a physical property of the rubber after vulcanization is excellent, sulfenamide-based vulcanization accelerators are preferable, and examples thereof include N-tert-butyl-2-benzothiazolyl sulfenamide (TBBS), N-cyclohexyl-2-benzothiazolyl sulfenamide (CZ), and N,N'-dicyclohexyl-2-benzothiazolyl sulfenamide (DZ).

In the case where a vulcanization accelerator is contained, from the viewpoint of vulcanization acceleration, the amount of the vulcanization accelerator per 100 parts by mass of the rubber component is preferably not less than 0.1 parts by mass and more preferably not less than 0.5 parts by mass. From the viewpoint of processability, the amount of the vulcanization accelerator is preferably not greater than 5 parts by mass and more preferably not greater than 3 parts by mass.

### <Production of Rubber Composition and Tire>

The rubber composition according to the present embodiment can be produced by a known method. The rubber composition according to the present embodiment can be produced by, for example, a method in which the above respective components are kneaded using a rubber kneading device such as an open roll, a Banbury mixer, and a sealed kneader and then vulcanization is performed.

Another embodiment of the present invention is a tire including a tire member formed from the above rubber composition. Examples of the tire member formed from the rubber composition include various tire members such as a tread, an under tread, a carcass, a sidewall, and a bead. Among them, a tread is preferable since wet grip performance, abrasion resistance, and low fuel consumption performance are excellent.

The tire according to the present embodiment can be produced by a normal method using the above rubber composition. Specifically, the tire according to the present embodiment can be produced by attaching a member, which is obtained by extruding an unvulcanized rubber composition obtained by kneading the above respective components so as to correspond to the shape of a tire member such as a tread, together with other tire members on a tire forming machine, shaping these members by a normal method to form an unvulcanized tire, and heating and pressurizing the unvulcanized tire in a vulcanizing machine.

The category of the tire of the present invention is not particularly limited, but the tire of the present invention is preferably a tire for a passenger car, a heavy duty tire for a truck or a bus, a tire for a motorcycle, a run flat tire, a non-pneumatic tire, or the like. Among them, the tire of the present invention is preferably a tire for a motorcycle from the viewpoint of having excellent grip performance.

### EXAMPLES

The present invention will be described by means of examples below, but the present invention is not limited to these examples.

Various chemicals used in examples and comparative examples are collectively described below.
SBR (oil-extended): amount of extended oil per 100 parts by mass of the rubber component: 34 parts by mass, weight-average molecular weight: 830 thousand, styrene content: 38% by mass, vinyl content 16% by mass
BR: BR730 (non-oil-extended BR, cis-1,4-bond content: 97% by mass, Mw/Mn = 2.5) manufactured by JSR Corporation
Aromatic vinyl polymer: SYLVATRAXX4401 (weight-average molecular weight: 700, glass transition temperature (Tg): 34°C) manufactured by Arizona Chemical Company
C5/C9-based petroleum resin: Petrotack 100V manufactured by Tosoh Corporation
Process oil: Diana Process NH-70S manufactured by Idemitsu Kosan Co., Ltd.
Carbon black 1: nitrogen adsorption specific surface area (N₂SA): 181 m²/g
Carbon black 2: Show Black N220 (nitrogen adsorption specific surface area (N₂SA): 125 m²/g) manufactured by Cabot Japan K.K.
Silica: Zeosil 115GR (nitrogen adsorption specific surface area (N₂SA): 160 m²/g) manufactured by Rhodia
Silane coupling agent: Si266 (bis(3-triethoxysilylpropyl)disulfide) manufactured by Evonik Degussa GmbH
Inorganic potassium salt: potassium tetraborate tetrahydrate (K₂B₄O₇·4H₂O) 48-mesh-under product (average particle size: 170 µm, melting point: 815°C (anhydride)) manufactured by YONEYAMA YAKUHIN KOGYO CO., LTD.
Antioxidant 1 (phenylenediamine-based antioxidant): Nocrac 6C (N-1,3-dimethylbutyl-N'-phenyl-p-phenylenediamine) manufactured by Ouchi Shinko Chemical Industrial Co., Ltd.
Antioxidant 2 (quinoline-based antioxidant): Nocrac 224 (2,2,4-trimethyl-1,2-dihydroquinoline polymer) manufactured by Ouchi Shinko Chemical Industrial Co., Ltd.
Zinc oxide: Zinc Oxide No. 1 manufactured by Mitsui Mining & Smelting Co., Ltd.
Stearic acid: stearic acid "Tsubaki" manufactured by NOF Corporation
Processing aid: EF44 (saturated fatty acid zinc salt) manufactured by Struktol Company of America
Wax: OZOACE 0355 manufactured by NIPPON SEIRO CO., LTD.
Sulfur: oil-treated sulfur (sulfur/oil = 100/5) manufactured by Karuizawa Refinery
Vulcanization accelerator 1 (guanidine-based vulcanization accelerator): Nocceler D (N,N'-diphenylguanidine) manufactured by Ouchi Shinko Chemical Industrial Co., Ltd.
Vulcanization accelerator 2 (sulfenamide-based vulcanization accelerator): Sanceler NS-G (N-(tert-butyl)-2-benzothiazole sulfenamide) manufactured by SANSHIN CHEMICAL INDUSTRY CO., LTD.

### Examples and Comparative Examples

In accordance with each of the blending formulas shown in Table 1, the blending components other than the sulfur and the vulcanization accelerators were put into a 1.7-L Banbury mixer manufactured by Kobe Steel, Ltd. such that the filling ratio was 58%, and were kneaded at a rotational speed of 80 rpm until reaching 140°C. Next, the sulfur and the vulcanization accelerators were added to the obtained kneaded product, and then the mixture was kneaded at 80°C for 5 minutes using an open roll to obtain an unvulcanized rubber composition of the formula according to each of examples and comparative examples.

In addition, the unvulcanized rubber composition was extruded into the shape of a tire tread using an extruder having a die with a predetermined shape, and was attached together with other tire members to form an unvulcanized tire, and the unvulcanized tire was press-vulcanized at 170°C for 12 minutes, whereby test tires (size: 180/55ZR17, rim: 5.5×17, internal pressure: 290 kPa) were produced and prepared.

The following evaluations were made for the obtained unvulcanized rubber composition, vulcanized rubber compositions, and test tires. Table 1 shows the evaluation results. The numerals in parentheses at SBR each represent a rubber component amount (parts by mass).

### <Wet Grip Performance Test>

Each test tire was mounted to the rear wheel of a motorcycle having an engine displacement of 1300 cc, a vehicle weight of 296 kg, and a total vehicle weight of 406 kg under the above conditions. A commercially available tire was mounted on the front wheel. Then, a test rider drove the test vehicle on a test course having a wet asphalt road surface with a water depth of 5 mm and made a sensory evaluation. The result is indicated as a score defined with the result of Comparative Example 1 being set as 100. A higher value indicates that the wet grip performance is better.

### <Abrasion Resistance Test>

A test rider drove the above test vehicle on a test course having a dry asphalt road surface, and the amount of abrasion of each test tire was measured after running for a certain distance. The result is the inverse of the tire abrasion amount and is indicated as an index defined with the result of Comparative Example 1 being set as 100. A higher value indicates that the abrasion resistance is better.

### [Table 1]

**Table 1**

| | | Example | | | | | | Comparative Example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| | SBR | 80 | 80 | 60 | 80 | 60 | 60 | 80 | 100 | 60 | 48 | 100 | 48 |
| | Numerals in parentheses are rubber component amounts | (60) | (60) | (45) | (60) | (45) | (45) | (60) | (75) | (45) | (36) | (75) | (36) |
| | BR | 40 | 40 | 55 | 40 | 55 | 55 | 40 | 25 | 55 | 64 | 25 | 64 |
| | Aromatic vinyl polymer | 25 | 20 | 30 | 40 | 15 | 20 | 15 | 20 | 40 | 10 | 40 | 25 |
| | C5/C9-based petroleum resin | 5 | 10 | | | 15 | 10 | 5 | 10 | | 10 | | 5 |
| | Process oil | | | | | | 10 | 10 | | | 10 | | 10 |
| | Carbon black 1 | 15 | 15 | 15 | 15 | 15 | 15 | 15 | 15 | 15 | 15 | 15 | 15 |
| | Carbon black 2 | 15 | 15 | 15 | 15 | 15 | 15 | 15 | 15 | 15 | 15 | 15 | 15 |
| | Silica | 80 | 80 | 80 | 80 | 80 | 80 | 80 | 80 | 80 | 80 | 80 | 80 |
| Blending amount (parts by mass) | Silane coupling agent | 6 | 6 | 6 | 6 | 6 | 6 | 6 | 6 | 6 | 6 | 6 | 6 |
| | Inorganic potassium salt | 1 | 1 | 1 | 1 | 1 | 1 | 1 | 1 | 1 | 1 | 1 | 1 |
| | Antioxidant 1 | 2 | 2 | 2 | 2 | 2 | 2 | 2 | 2 | 2 | 2 | 2 | 2 |
| | Antioxidant 2 | 1 | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Processing aid | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 |
| | Sulfur | 2 | 2 | 2 | 2 | 2 | 2 | 2 | 2 | 2 | 2 | 2 | 2 |
| | Vulcanization accelerator 1 | 2 | 2 | 2 | 2 | 2 | 2 | 2 | 2 | 2 | 2 | 2 | 2 |
| | Vulcanization accelerator 2 | 1 | 1 | 1 | 1 | 1 | 1 | 1 | 1 | 1 | 1 | 1 | 1 |
| Evaluation results | Wet grip performance index | 105 | 103 | 102 | 106 | 100 | 102 | 100 | 103 | 99 | 96 | 103 | 99 |
| | Abrasion resistance index | 102 | 101 | 102 | 99 | 102 | 102 | 100 | 95 | 99 | 101 | 93 | 99 |

From the results in Table 1, the tire including the tire member formed from the rubber composition of the present invention is understood to have excellent wet grip performance and abrasion resistance in a balanced manner.

The rubber composition for treads of the present invention and the tire including the tire member formed from the rubber composition have excellent wet grip performance and abrasion resistance in a balanced manner.

A rubber composition for treads having excellent wet grip performance, abrasion resistance, and low fuel consumption performance in a balanced manner, and a tire including a tire member formed from the rubber composition, are provided. The rubber composition for tire treads contains a rubber component and a plasticizer, the rubber component contains 40 to 65% by mass of a styrene-butadiene rubber and 35 to 60% by mass of a butadiene rubber, the plasticizer contains an aromatic vinyl polymer having a glass transition temperature equal to or higher than 20°C, and an amount of the aromatic vinyl polymer relative to an amount of the styrene-butadiene rubber (amount of aromatic vinyl polymer/amount of styrene-butadiene rubber) is 0.3 to 0.75.

## Claims

1. A rubber composition for tire treads, containing a rubber component and a plasticizer, wherein
the rubber component contains 40 to 65% by mass of a styrene-butadiene rubber and 35 to 60% by mass of a butadiene rubber,
the plasticizer contains an aromatic vinyl polymer having a glass transition temperature equal to or higher than 20°C, and
an amount of the aromatic vinyl polymer relative to an amount of the styrene-butadiene rubber (amount of aromatic vinyl polymer/amount of styrene-butadiene rubber) is 0.3 to 0.75.

2. The rubber composition according to claim 1, further containing a C5/C9-based petroleum resin as the plasticizer.

3. A tire including a tire member formed from the rubber composition according to claim 1 or 2.

## Patentansprüche

1. Kautschukzusammensetzung für Reifenlaufflächen, die eine Kautschukkomponente und einen Weichmacher enthält, wobei
die Kautschukkomponente 40 bis 65 Massen-% eines Styrol-Butadien-Kautschuks und 35 bis 60 Massen-% eines Butadien-Kautschuks enthält,
der Weichmacher ein aromatisches Vinylpolymer mit einer Glasübergangstemperatur gleich oder höher als 20°C enthält, und
eine Menge des aromatischen Vinylpolymers im Verhältnis zu einer Menge des Styrol-Butadien-Kautschuks (Menge des aromatischen Vinylpolymers/Menge des Styrol-Butadien-Kautschuks) 0,3 bis 0,75 beträgt.

2. Die Kautschukzusammensetzung nach Anspruch 1, die ferner ein Erdölharz auf C5/C9-Basis als den Weichmacher enthält.

3. Reifen, der ein Reifenbauteil beinhaltet, das aus der Kautschukzusammensetzung nach Anspruch 1 oder 2 gebildet ist.

## Revendications

1. Composition de caoutchouc pour bandes de roulement de pneu, comprenant un composant caoutchouc et un plastifiant, dans laquelle
le composant caoutchouc contient 40 à 65 % en masse d'un caoutchouc de styrène-butadiène et 35 à 60 % en masse d'un caoutchouc de butadiène,
le plastifiant contient un polymère vinylaromatique ayant une température de transition vitreuse égale ou supérieure à 20°C, et
la quantité du polymère vinylaromatique par rapport à la quantité du caoutchouc de styrène-butadiène (quantité de polymère vinylaromatique/quantité de caoutchouc de styrène-butadiène) est de 0,3 à 0,75.

2. Composition de caoutchouc selon la revendication 1, contenant en outre une résine de pétrole à base de C5/C9 en tant que plastifiant.

3. Pneu contenant un élément de pneu formé à partir de la composition de caoutchouc de la revendication 1 ou 2.
